# EUROPÄISCHE PATENTSCHRIFT

(11) **EP 3 057 808 B1**
(45) Veröffentlichungstag und Bekanntmachung des Hinweises auf die Patenterteilung: **12.07.2017**
(21) Anmeldenummer: 14784453.4
(22) Anmeldetag: 15.10.2014
(51) Int. Cl.: B60B 39/04, B60B 39/06, B65G 53/46, B61C 15/10

(54) **AUSTRAGSEINRICHTUNG FÜR GRANULAT**
GRANULAR MATERIAL DISCHARGE DEVICE
DISPOSITIF DE DÉVERSEMENT DE GRANULÉS

(30) Priorität: 15.10.2013 AT 506662013
(43) Veröffentlichungstag der Anmeldung: 24.08.2016
(73) Patentinhaber: Nowe GmbH, 31008 Elze (DE)
(72) Erfinder: BARTLING, Werner, 31008 Elze (DE)
(74) Vertreter: Sonn & Partner Patentanwälte
(86) Internationale Anmeldenummer: PCT/EP2014/072088
(87) Internationale Veröffentlichungsnummer: WO 2015/055699

(56) Entgegenhaltungen:
- DE-A1- 2 606 483
- DE-A1- 3 425 895
- DE-A1- 3 720 988
- DE-A1- 19 501 179
- US-A- 5 795 108

## Beschreibung

Die Erfindung betrifft eine Austragseinrichtung für Granulat, mit einem Gehäuse mit zumindest einer Zulauföffnung für das Granulat, mit einem mit einem Motor verbundenen, um eine vertikale Drehachse rotierenden, Zellenrad mit mehreren Flügeln und dazwischen angeordneten Kammern, in welchen Kammern das Granulat bei Drehung des Zellenrades von der zumindest einen Zulauföffnung zu zumindest einem Auslass beförderbar ist.

Unter dem Begriff "Granulat" ist ein körniger bis pulverförmiger, leicht schüttbarer Feststoff zu verstehen, beispielsweise Streugut oder Streusand, wie er zur Verbesserung der Bremswirkung zwischen den Rädern von Fahrzeugen und der Fahrbahn eingesetzt wird. Beispielsweise wird bei Schienenfahrzeugen Granulat bzw. Sand von einem Behälter über eine Dosier- und Fördereinrichtung über eine Düse vor den Schienenrädern in den Spalt zwischen Schienenrad und Schiene befördert, um den Reibungswiderstand zwischen Schienenrad und Schiene zu erhöhen und den Bremsweg zu verringern.

Beispielsweise beschreibt die AT 505 783 B1 ein derartiges Streugerät, wobei die Dosierung des Streuguts über ein rotierendes Zellenrad vorgenommen wird.

Ein anderes Streugerät, bei dem die Dosierung und Förderung des Streuguts mit Druckluft erfolgt, ist beispielsweise aus der WO 2008/064747 A1 bekannt geworden.

Die DE 195 011 179 A1 betrifft eine Austragseinrichtung für Granulat der gegenständlichen Art, welche jedoch relativ groß in ihrem Aufbau ist und keine Maßnahmen für eine Verbesserung der Verschleißeigenschaften aufweist.

Die DE 26 064 83 A1 beschreibt eine Einrichtung zum Fördern von Holzspänen, sowie pulver- oder pastenartige oder pastöse Stoffe, bei der die Dosierung des geförderten Materials keine Rolle spielt.

Die US 5,795,108 A betrifft eine Vorrichtung zur Förderung eines Granulats, insbesondere Sand, und zur gleichmäßigen Verteilung desselben, beispielsweise auf Golfplätzen, wo es auf eine genau Dosierung des Materials nicht ankommt.

Insbesondere bei der Verwendung relativ hartem Granulats, beispielsweise von Quarzsand, besteht das Problem eines relativ raschen Verschleißes von Komponenten der Austragseinrichtung, da das Granulat bzw. der Sand durch die Reibung an den Komponenten der Austragseinrichtung zu einer raschen Verschlechterung der Austragsfunktion oder sogar zu einer Fehlfunktion führt. Durch Verwendung von sehr hochwertigen und beständigen Materialien für die Komponenten der Austragseinrichtung konnten keine wesentlichen Verbesserungen erzielt werden, da es dabei zu Blockaden kommen kann, wenn das harte Granulat mit bewegten Teilen der Austragseinrichtung aus ebenfalls hartem Material zusammentreffen. Bessere Ergebnisse konnten daher bei Verwendung von weicheren, allerdings auch weniger widerstandsfähigen Materialien, insbesondere für die bewegten Teile der Austragseinrichtung, erzielt werden. Beispielsweise werden Zellenräder häufig aus Kunststoff hergestellt, wodurch jedoch die Lebensdauer erheblich reduziert wird. Der Austausch der Verschleißteile verursacht jedoch Standzeiten und Montagekosten, welche meist unerwünscht sind. Insbesondere bei Streugeräten, wie sie bei Schienenfahrzeugen häufig eingesetzt werden, sind niedrige Standzeiten und kurze Wartungsintervalle nicht erwünscht.

Die Aufgabe der vorliegenden Erfindung besteht daher in der Schaffung einer oben genannten Austragseinrichtung für Granulat, welche durch einen niedrigen Verschleiß, eine erhöhte Standzeit und somit verlängerte Wartungsintervalle ausgezeichnet wird. Nachteile bestehender Austragseinrichtungen in Bezug auf den Verschleiß sollen reduziert oder verhindert werden.

Gelöst wird die erfindungsgemäße Aufgabe dadurch, dass das Gehäuse zur Anordnung innerhalb eines Behälters für das Granulat ausgebildet ist, die zumindest eine Zulauföffnung seitlich am Gehäuse schräg abwärts verlaufend angeordnet ist, und das Zellenrad innerhalb einer im Wesentlichen zylinderförmigen Verschleißbuchse und der zumindest eine Auslass an der Unterseite der Verschleißbuchse angeordnet ist. Durch den zumindest einen Auslass an der Unterseite der Verschleißbuchse ergeben sich besonders vorteilhafte Wege des Granulats vom Behälter des Granulats bis zu dem zumindest einen Auslass und somit zu einer relativ geringen Verweildauer des Granulats innerhalb der Austragseinrichtung bzw. des Zellenrades, was wiederum zu einem geringen Verschleiß führt. Durch die vertikale Anordnung der Drehachse des Zellenrades können die Verschleißeigenschaften verbessert werden, da das Granulat durch die Schwerkraft im Wesentlichen in die Zellen des Zellenrades rieselt und bei Drehung des Zellenrades zu dem zumindest einen Auslass befördert wird. Zusätzlich kann ein Zellenrad mit vertikaler Drehachse leichter montiert und demontiert werden, sodass die Wartungsdauer und auch die Wartungskosten reduziert werden können. Durch die Anordnung der Austragseinrichtung innerhalb des Behälters für das Granulat kann einerseits die Bauhöhe des Granulatbehälters und der Austragseinrichtung sowie der allfälligen Fördereinrichtung gering gehalten werden und die Wartung erleichtert werden, da die Austragseinrichtung von unten aus dem Granulatbehälter demontiert und wiederum montiert werden kann. Durch die Anordnung der Austragseinrichtung im Granulatbehälter wird auch auf einfache Weise ein optimaler Schutz gegen äußere Einflüsse erreicht und werden somit ungewollte Störpotenziale und somit Systemausfälle wirksam vermieden. Zusätzlich wird die Schwerkraft optimal ausgenutzt, indem das Granulat ohne Hilfe vom Behälter in die zumindest eine Zulauföffnung rieseln kann. Von den seitlich am Gehäuse angeordneten Zulauföffnungen gelangt das Granulat direkt in die Kammern zwischen den Flügeln des Zellenrades und wird bei Drehung des Zellenrades transportiert und gelangt dann zu dem zumindest einen entsprechend angeordneten Auslass zur weiteren Beförderung des Granulats. Die Verschleißbuchse, welche aus geeignetem Material gebildet werden kann, ist einfach und rasch austauschbar, ohne dass die gesamte Austragseinrichtung ersetzt werden muss. Durch die im Wesentlichen vertikale Anordnung der Verschleißbuchse ist ein Ausbau und Einbau von der Unterseite der Austragseinrichtung einfach und rasch möglich.

Wenn der zumindest eine Auslass schlitzförmig oder sektorförmig ausgebildet ist, ergeben sich weitere Vorteile. Bei einer sektorförmigen Ausbildung des Auslasses erstreckt sich dieser über zumindest eine oder mehrere Kammern zwischen den Flügeln des Zellenrades. Nach dem zumindest einen Auslass kann das Granulat auf unterschiedliche Weise zu dem gewünschten Ziel befördert werden, beispielsweise durch eine mechanische oder pneumatische Förderung.

Idealerweise weist das Zellenrad mindestens acht Flügel auf. Dadurch resultieren mindestens acht Kammern zwischen den Flügeln des Zellenrades, innerhalb welcher das Granulat befördert wird. Je mehr Flügel bzw. dazwischen angeordnete Kammern das Zellenrad aufweist, desto geringer ist im Wesentlichen die Verweildauer des Granulats innerhalb des Zellenrades und somit der Verschleiß des Zellenrades bzw. der das Zellenrad umgebenden Verschleißbuchse.

Wenn die Flügel des Zellenrades schaufelartig ausgebildet sind, kann eine weitere Optimierung des Transports des Granulats mithilfe des Zellenrades zu dem zumindest einen Auslass stattfinden und die Reibung des Granulats an den Flügeln des Zellenrades reduziert werden.

Wenn die Flügel des Zellenrades schräg zur Richtung der Drehachse angeordnet sind, kann eine weitere Optimierung des Transports des Granulats erreicht werden. Durch die schräge Anordnung der Flügel stellt sich im Unterschied zu einer geraden Anordnung der Flügel eine horizontale und eine vertikale Kraftrichtung ein. Besonders die vertikale Kraftkomponente führt zu einer gezielten Förderung des Granulats nach unten, wodurch ein intensiverer Granulataustrag erreicht werden kann.

Vorteilhafterweise sind zwei gegenüberliegende Zulauföffnungen am Gehäuse vorgesehen. Dadurch kann die geförderte Menge an Granulat bei gleichbleibender Drehgeschwindigkeit des Zellenrades erhöht oder die Drehgeschwindigkeit des Zellenrades bei gleicher geförderter Granulatmenge entsprechend verringert werden. Zudem können bei zwei oder mehr Zulauföffnungen die Wege des Granulats innerhalb der Austragseinrichtung zwischen Zulauföffnung und Auslass reduziert und somit der Verschleiß ebenfalls verringert werden.

Optimale Riesel- oder Fließbedingungen für das Granulat sind dann gegeben, wenn die Zulauföffnungen in einem Winkel von 30 bis 40° zur Horizontalen schräg abwärts verlaufend angeordnet sind. Dabei ist es von Vorteil, wenn die Unterseite des Granulatbehälters bereits in einer ähnlichen Weise schräg angeordnet ist und in die entsprechend schräg angeordneten Zulauföffnungen der Austragseinrichtungen übergeht.

Wenn der Motor über dem Zellenrad angeordnet ist, kann die Montage und Demontage von Verschleißteilen der Austragseinrichtung erleichtert werden.

An der Unterseite des Gehäuses sind Befestigungselemente zur Befestigung einer Einrichtung zur Förderung des Granulats vorgesehen, welche Förderungseinrichtung verschiedenartig ausgebildet sein kann. Je nach Anwendung kommen mechanische oder pneumatische Fördereinrichtungen hauptsächlich zum Einsatz.

Von Vorteil ist weiters, wenn die Verschleißbuchse gegenüber dem Zellenrad in Richtung der Drehachse des Zellenrades verschiebbar ist. Dadurch kann eine Kompensation des Verschleißes bzw. eine Nachjustierung der Austragseinrichtung erzielt werden und die Standzeit erhöht und die Wartungsintervalle verlängert werden.

Diese Nachjustierung kann beispielsweise dadurch erfolgen, dass die Verschleißbuchse über zumindest eine Feder in Richtung Zellenrad verschiebbar gelagert ist. Durch die federunterstützte verschiebbare Lagerung der Verschleißbuchse kann ein Abrieb an der Verschleißbuchse und bzw. oder dem Zellenrad bis zu einem gewissen Grad ausgeglichen und somit die Standzeit der Austragseinrichtung verlängert werden.

Alternativ dazu kann auch das Zellenrad gemeinsam mit dem Motor über zumindest eine Feder in Richtung der Verschleißbuchse verschieblich gelagert sein. Die zumindest eine Feder presst somit das Zellenrad gegen die Verschleißbuchse und gleicht somit einen Verschleiß bis zu einem gewissen Grad aus.

Gemäß einem weiteren Merkmal der Erfindung sind die Flügel des Zellenrades an der Unterseite in Richtung der Drehachse des Zellenrades schräg verlaufend angeordnet, und die Unterseite der Verschleißbuchse komplementär zu den Flügeln des Zellenrades trichterförmig ausgebildet. Dadurch wird die Förderung des Granulats innerhalb der Austragseinrichtung noch weiter unterstützt und der Verschleiß durch Reibung des Granulats an den Komponenten der Austragseinrichtung reduziert.

Vorteilhafterweise ist das Zellenrad aus Kunststoff, vorzugsweise aus Polyurethan, gebildet. Kunststoff ist relativ billig und weist gute Korrosionsbeständigkeit auf. Ultrahochmolekulares Polyethylen weist besonders gute Verschleißeigenschaften auf. Theoretisch sind für das Zellenrad und die Verschleißbuchse auch metallische Materialien denkbar. Eine der beiden Komponenten sollte jedoch gegenüber der anderen Komponente nachgiebig sein und daher vorzugsweise durch Kunststoff gebildet sein.

Die Verschleißbuchse kann ebenfalls aus Kunststoff, vorzugsweise aus ultrahochmolekularem Polyethylen, gebildet sein.

Die Erfindung wird anhand der beigefügten Zeichnungen näher erläutert. Darin zeigen:
- Fig. 1: eine Variante einer Austragseinrichtung in vertikal geschnittener Ansicht;
- Fig. 2: die Austragseinrichtung gemäß Fig. 1 entlang der Schnittlinie II - II;
- Fig. 3: die Austragseinrichtung gemäß Fig. 1 entlang der Schnittlinie II - II in einer abgewandelten Form;
- Fig. 4: eine Variante einer Ausführungsform des Zellenrades in Seitenansicht;
- Fig. 5: eine weitere Variante einer Austragseinrichtung in vertikal geschnittener Ansicht;
- Fig. 6: die Austragseinrichtung gemäß Fig. 5 entlang der Schnittlinie VI - VI; und
- Fig. 7: ein schematisches Blockschaltbild einer Verwendung der Austragseinrichtung in einer Sandstreueinrichtung.

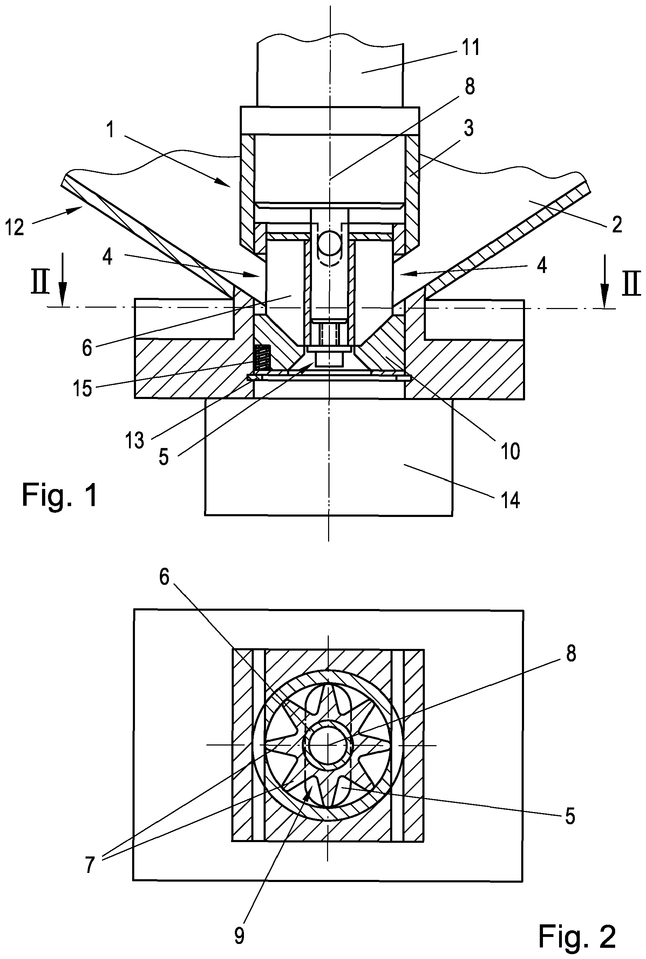

Fig. 1 zeigt eine Variante einer Austragseinrichtung 1 in vertikal geschnittener Ansicht. Die Austragseinrichtung 1 ist innerhalb einem Behälters 12 für das Granulat 2 angeordnet. Durch eine vertikale Einbaulage der Austragseinrichtung 1 im Behälter 12 für das Granulat 2 wird auf einfache Weise ein optimaler Schutz der Austragseinrichtung 1 gegen äußere Einflüsse erreicht und werden somit ungewollte Störpotenziale und somit Systemausfälle wirksam vermieden. Die Austragseinrichtung 1 umfasst ein Gehäuse 3 mit zumindest einer Zulauföffnung 4 für das Granulat 2 und einem Zellenrad 6, welches mit einem Motor 11 verbunden ist. Das Zellenrad 6 weist mehrere Flügel 7 und dazwischen angeordnete Kammern 9 auf, in welchen das Granulat 2 bei Drehung des Zellenrades 6 von der zumindest einen Zulauföffnung 4 zu zumindest einem Auslass 5 befördert wird. Die Flügel 7 und Kammern 9 des Zellenrades 6 sind aus der Schnittzeichnung gemäß Fig. 2 besser ersichtlich. Die Drehachse 8 des Zellenrades 6 ist im Wesentlichen vertikal angeordnet, sodass unter Ausnutzung der Schwerkraft das Granulat 2 über die zumindest eine Zulauföffnung 4 in die Kammern 9 des Zellenrades 6 gelangen kann und bei Drehung des Zellenrades 6 zu dem zumindest einen Auslass 5 befördert wird. Durch die erfindungsgemäße Anordnung sind die Wege des Granulats 2 innerhalb der Austragseinrichtung 1 gering und die Verweildauer des Granulats 2 in der Austragseinrichtung 1 kurz, wodurch der Verschleiß, insbesondere des Zellenrades 6, gering gehalten werden kann. Idealerweise ist das Zellenrad 6 innerhalb einer im Wesentlichen zylinderförmigen Verschleißbuchse 10 angeordnet. Die Verschleißbuchse 10 und das Zellenrad 6 sind bei der gegenständlichen Konstruktion durch eine hohe Standzeit und lange Wartungsintervalle gekennzeichnet. Sollten sie dennoch getauscht werden müssen, sind sie einfach von der Unterseite des Behälters 12 für das Granulat 2 austauschbar. Vorteilhafterweise weist das Zellenrad 6 mindestens acht Flügel 7 und somit acht Kammern 9 auf. Die Zulauföffnungen 4 sind seitlich am Gehäuse 3 der Austragseinrichtung 1 angeordnet und wie die Unterseite des Behälters 12 für das Granulat 2 geneigt angeordnet. Der zumindest eine Auslass 5 der Austragseinrichtung 1 ist an der Unterseite der Verschleißbuchse 10 angeordnet und vorzugsweise schlitzförmig ausgebildet, wie anhand Fig. 2 erkennbar. Durch den Abrieb des Granulats 2 am Zellenrad 6 bzw. dessen Flügeln 7 und der Verschleißbuchse 10 kommt es zu einem Abrieb, der ab einem gewissen Grad dazu führt, dass kein optimaler Transport bzw. eine Dosierung des Granulats 2 stattfinden kann. Um zu verhindern, dass die Verschleißteile der Austragseinrichtungen 1 häufig gewechselt werden müssen, ist erfindungsgemäß die Verschleißbuchse 10 gegenüber dem Zellenrad 6 in Richtung der Drehachse 8 des Zellenrades 6 verschiebbar ausgebildet. Dies geschieht bei der Ausführungsvariante gemäß den Fig. 1 und 2 durch zumindest eine Feder 15, welche die Verschleißbuchse 10 in Richtung Zellenrad 6 presst. Auf diese Weise kann eine Nachjustierung der Verschleißbuchse 10 gegenüber dem Zellenrad 6 bis zu einem gewissen Grad, beispielsweise einige Millimeter, erfolgen und somit die Standzeit der Austragseinrichtung 1 erhöht und die Wartungsintervalle verlängert werden.

Das Zellenrad 6 ist vorzugsweise aus Kunststoff, vorzugsweise aus Polyurethan, gebildet, wohingegen die Verschleißbuchse 10 ebenfalls aus Kunststoff, vorzugsweise aus ultrahochmolekularem Polyethylen, hergestellt sein kann. Das Gehäuse 3 der Austragseinrichtung 1 ist vorzugsweise aus korrosionsfestem, leichtem Metall, beispielsweise Aluminium oder einer Aluminiumlegierung, gebildet. Der Motor 11 zum Antrieb des Zellenrades 6, welcher vorzugsweise oberhalb des Zellenrades 6 angeordnet ist, um die Montage und Demontage des Zellenrades 6 zu erleichtern, kann durch einen DC-Getriebemotor gebildet sein.

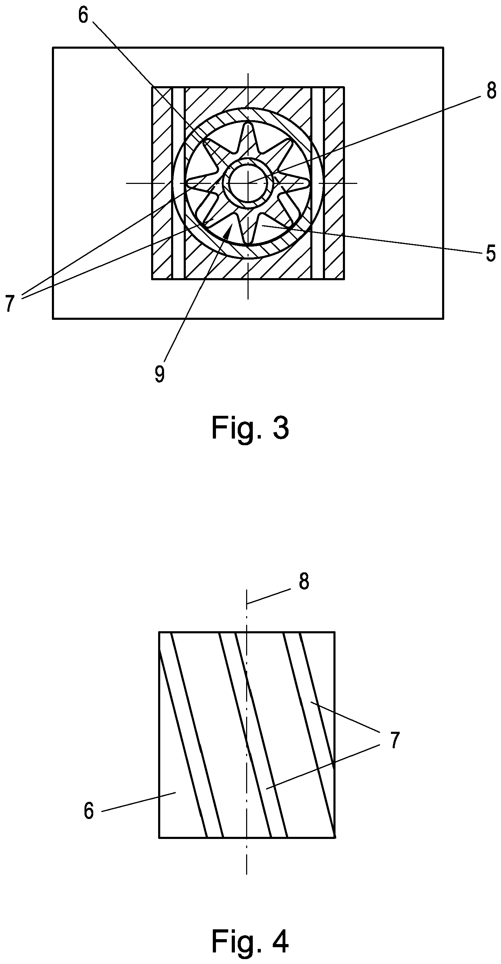

Bei der Ausführungsvariante gemäß Fig. 3 ist der Auslass 5 nicht schlitz- sondern sektorförmig ausgebildet und umfasst beispielsweise 3 Kammern 9 zwischen den Flügeln 7 des Zellenrades 6. Zur Dosierung besonders hoher Mengen an Granulat 2 kann der Zulauf für das Granulat 2 auch anders, beispielsweise die Zulauföffnung horizontal und der Auslass vertikal neben dem Zellenrad angeordnet sein (nicht dargestellt). Eine solche Ausführungsvariante hat auch in Bezug auf eine gerinere Baugröße der Austragseinrichtung Vorteile.

Fig. 4 zeigt eine Variante einer Ausführungsform des Zellenrades 6 in Seitenansicht, wobei die Flügel 7 schräg zur Richtung der Drehachse 8 angeordnet sind. Dadurch kann eine Optimierung des Transports des Granulats 2 erreicht werden. Durch die schräge Anordnung der Flügel 7 stellt sich im Unterschied zu einer geraden Anordnung der Flügel 7 eine horizontale und eine vertikale Kraftrichtung ein. Besonders die vertikale Kraftkomponente führt zu einer gezielten Förderung des Granulats 2 nach unten in Richtung Auslass 5, wodurch ein intensiverer Granulataustrag erreicht werden kann.

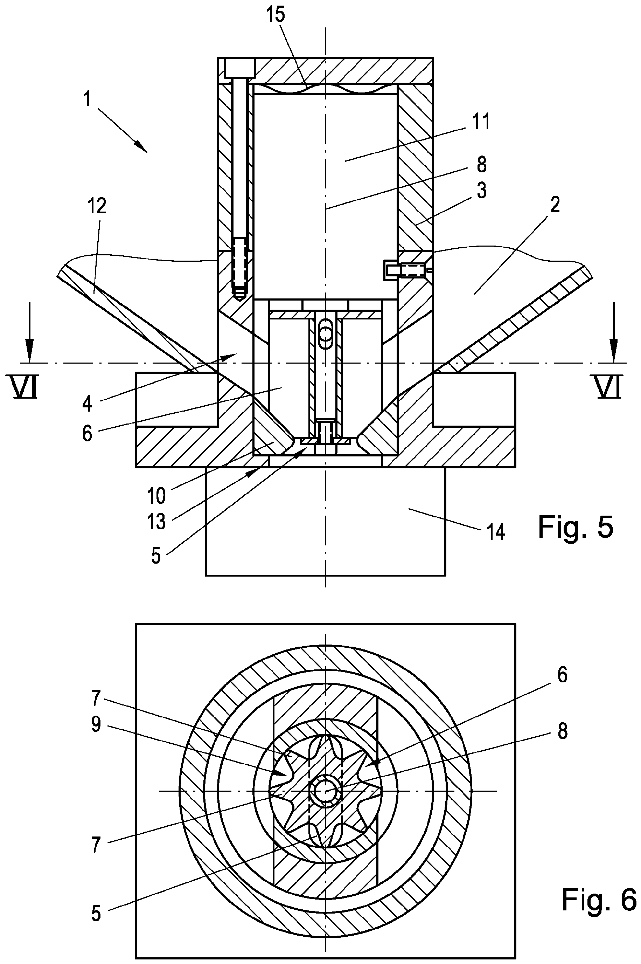

Fig. 5 und Fig. 6 zeigen eine weitere Variante einer Austragseinrichtung 1 in vertikal und horizontal geschnittener Ansicht, mit einer gegenüber der Variante gemäß den Figuren 1 und 2 geänderten Verschleißnachführung. Bei dieser Ausführungsvariante ist nicht die Verschleißbuchse 10 in Richtung Zellenrad 6 vorgespannt, sondern das Zellenrad 6 zusammen mit dem Motor 11 über zumindest eine Feder 15 gegen die Verschleißbuchse 10 gepresst. Auch auf diese Weise kann eine Nachjustierung bzw. eine Verschleißkompensation stattfinden. Ansonsten sind die Komponenten im Wesentlichen identisch mit jenen in den Fig. 1 und 2 dargestellten ausgebildet. Durch die Verschiebung des Motors 11 und des Zellenrades 6 gegenüber der Verschleißbuchse 10 müssen die Befestigungselemente zur Befestigung des Motors innerhalb des Gehäuses 3 in entsprechenden Langlöchern angeordnet sein, welche eine Verschiebung in Richtung der Drehachse 8 um einige Millimeter zulassen.

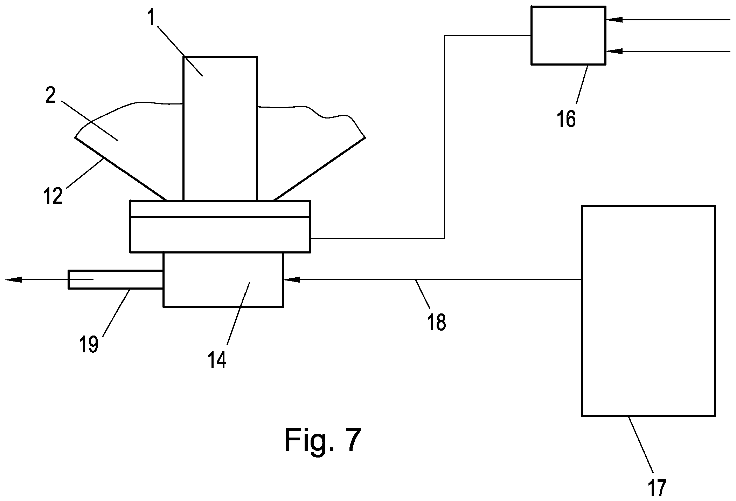

Schließlich ist in Fig. 7 ein schematisches Blockschaltbild einer Verwendung der Austragseinrichtung 1 in einer Sandstreueinrichtung dargestellt. Die Austragseinrichtung 1 ist im Behälter 12 für das Granulat 2 angeordnet und mit einer entsprechenden Steuereinrichtung 16 verbunden. Die Steuereinrichtung 16 steuert die Drehzahl des Zellenrades 6 in der Austragseinrichtung 1 und somit die Menge an Granulat, wie sie an die Fördereinrichtung 14, welche unterhalb der Austragseinrichtung angeordnet ist, weitergeleitet wird. Im dargestellten Beispiel ist die Fördereinrichtung 14 zur Förderung des Granulats 2 durch eine pneumatische Fördereinrichtung gebildet. Zu diesem Zweck wird Druckluft von einer Druckluftquelle 17 über eine Druckluftleitung 18 in die Fördereinrichtung 14 eingebracht und das Granulat, welches von der Austragseinrichtung 1 über den zumindest einen Auslass 5 herunter rieselt, über eine Förderleitung 19 zu dem gewünschten Ort, beispielsweise vor das Schienenrad eines Schienenfahrzeuges, befördert.

Andere Varianten der Steuerung der Austragseinrichtung 1 und Förderung des Granulats 2 sind selbstverständlich auch denkbar.

Die vorliegende Erfindung zeichnet sich durch optimale Verschleißeigenschaften aus, ohne dass die Konstruktion der Austragseinrichtung besonders aufwändig oder teuer wäre.

## Patentansprüche

1. Austragseinrichtung (1) für Granulat (2), mit einem Gehäuse (3) mit zumindest einer Zulauföffnung (4) für das Granulat (2), mit einem mit einem Motor (11) verbundenen, um eine vertikale Drehachse (8) rotierenden Zellenrad (6) mit mehreren Flügeln (7) und dazwischen angeordneten Kammern (9), in welchen Kammern (9) das Granulat (2) bei Drehung des Zellenrades (6) von der zumindest einen Zulauföffnung (4) zu zumindest einem Auslass (5) beförderbar ist, wobei das Zellenrad (6) innerhalb einer im wesentlichen zylinderförmigen Verschleißbuchse (10) und der zumindest eine Auslass (5) an der Unterseite der Verschleißbuchse (10) angeordnet ist;
**dadurch gekennzeichnet, dass** das Gehäuse (3) zur Anordnung innerhalb eines Behälters (12) für das Granulat (2) ausgebildet ist, und dass die zumindest eine Zulauföffnung (4) seitlich am Gehäuse (3) schräg abwärts verlaufend angeordnet ist.

2. Austragseinrichtung (1) nach Anspruch 1, **dadurch gekennzeichnet, dass** der zumindest eine Auslass (5) schlitzförmig oder sektorförmig ausgebildet ist.

3. Austragseinrichtung (1) nach Anspruch 1 oder 2, **dadurch gekennzeichnet, dass** das Zellenrad (6) mindestens acht Flügel (7) aufweist.

4. Austragseinrichtung (1) nach einem der Ansprüche 1 bis 3, **dadurch gekennzeichnet, dass** die Flügel (7) des Zellenrades (6) schaufelartig ausgebildet sind.

5. Austragseinrichtung (1) nach einem der Ansprüche 1 bis 4, **dadurch gekennzeichnet, dass** die Flügel (7) des Zellenrades (6) schräg angeordnet sind.

6. Austragseinrichtung (1) nach einem der Ansprüche 1 bis 5, **dadurch gekennzeichnet, dass** zwei gegenüberliegende Zulauföffnungen (4) am Gehäuse (3) vorgesehen sind.

7. Austragseinrichtung (1) nach einem der Ansprüche 1 bis 6, **dadurch gekennzeichnet, dass** die Zulauföffnungen (4) in einem Winkel von 30 bis 40° zur Horizontalen schräg abwärts verlaufend angeordnet sind.

8. Austragseinrichtung (1) nach einem der Ansprüche 1 bis 7, **dadurch gekennzeichnet, dass** der Motor (11) über dem Zellenrad (6) angeordnet ist.

9. Austragseinrichtung (1) nach einem der Ansprüche 1 bis 8, **dadurch gekennzeichnet, dass** an der Unterseite des Gehäuses (3) Befestigungselemente (13) zur Befestigung einer Einrichtung (14) zur Förderung des Granulats (2) vorgesehen sind.

10. Austragseinrichtung (1) nach einem der Ansprüche 1 bis 9, **dadurch gekennzeichnet, dass** die Verschleißbuchse (10) gegenüber dem Zellenrad (6) in Richtung der Drehachse (8) des Zellenrades (6) verschiebbar ist.

11. Austragseinrichtung (1) nach Anspruch 10, **dadurch gekennzeichnet, dass** die Verschleißbuchse (10) über zumindest eine Feder (15) in Richtung Zellenrad (6) verschiebbar gelagert ist.

12. Austragseinrichtung (1) nach einem der Ansprüche 1 bis 9, **dadurch gekennzeichnet, dass** das Zellenrad (6) gemeinsam mit dem Motor (11) über zumindest eine Feder (15) in Richtung der Verschleißbuchse (10) verschieblich gelagert ist.

13. Austragseinrichtung (1) nach einem der Ansprüche 1 bis 12, **dadurch gekennzeichnet, dass** die Flügel (7) des Zellenrades (6) an der Unterseite in Richtung der Drehachse (8) des Zellenrades (6) schräg verlaufend angeordnet sind, und dass die Unterseite der Verschleißbuchse (10) komplementär zu den Flügeln (7) des Zellenrades (6) trichterförmig ausgebildet ist.

14. Austragseinrichtung (1) nach einem der Ansprüche 1 bis 13, **dadurch gekennzeichnet, dass** das Zellenrad (6) aus Kunststoff, vorzugsweise aus Polyurethan, gebildet ist.

15. Austragseinrichtung (1) nach einem der Ansprüche 1 bis 14, **dadurch gekennzeichnet, dass** die Verschleißbuchse (10) aus Kunststoff, vorzugsweise aus ultrahochmolekularem Polyethylen, gebildet ist.

## Claims

1. A discharge device (1) for granular material (2), with a housing (3) having at least one inlet (4) for the granular material (2), and with a star feeder (6) that is connected to a motor (11), rotates about a vertical axis of rotation (8) and has multiple vanes (7) and chambers (9) located therebetween, in which chambers (9) the granular material (2) is conveyable from the at least one inlet (4) to at least one outlet (5) when the star feeder (6) rotates, wherein the star feeder (6) is arranged within an essentially cylindrical wear sleeve (10) and the at least one outlet (5) is arranged on the bottom side of the wear sleeve (10); **characterized in that** the housing (3) is designed to be arranged within a container (12) for the granular material (2), and **in that** the at least one inlet (4) is laterally arranged on the housing (3) in a manner extending obliquely downwards.

2. The discharge device (1) according to claim 1, **characterized in that** the at least one outlet (5) is formed in a slit-shaped or sector-shaped manner.

3. The discharge device (1) according to claim 1 or 2, **characterized in that** the star feeder (6) comprises at least eight vanes (7).

4. The discharge device (1) according to one of claims 1 to 3, **characterized in that** the vanes (7) of the star feeder (6) are formed like blades.

5. The discharge device (1) according to one of claims 1 to 4, **characterized in that** the vanes (7) of the star feeder (6) are arranged obliquely.

6. The discharge device (1) according to one of claims 1 to 5, **characterized in that** two opposite inlets (4) are provided on the housing (3).

7. The discharge device (1) according to one of claims 1 to 6, **characterized in that** the inlets (4) are arranged at an angle of 30 to 40° to the horizontal line in a manner extending obliquely downwards.

8. The discharge device (1) according to one of claims 1 to 7, **characterized in that** the motor (11) is arranged above the star feeder (6).

9. The discharge device (1) according to one of claims 1 to 8, **characterized in that** fastening elements (13) for fastening a device (14) for conveying the granular material (2) are provided on the bottom side of the housing (3).

10. The discharge device (1) according to one of claims 1 to 9, **characterized in that** the wear sleeve (10) is movable relative to the star feeder (6) in the direction of the axis of rotation (8) of the star feeder (6).

11. The discharge device (1) according to claim 10, **characterized in that** the wear sleeve (10) is supported to be movable towards the star feeder (6) by at least one spring (15).

12. The discharge device (1) according to one of claims 1 to 9, **characterized in that** the star feeder (6), together with the motor (11), is supported to be movable towards the wear sleeve (10) by at least one spring (15).

13. The discharge device (1) according to one of claims 1 to 12, **characterized in that** the vanes (7) of the star feeder (6) are provided on the bottom side so as to extend obliquely with respect to the axis of rotation (8) of the star feeder (6), and that the bottom side of the wear sleeve (10) is designed in a funnel-shaped manner complementary to the vanes (7) of the star feeder (6).

14. The discharge device (1) according to one of claims 1 to 13, **characterized in that** the star feeder (6) is made of plastic, preferably polyurethane.

15. The discharge device (1) according to one of claims 1 to 14, **characterized in that** the wear sleeve (10) is made of plastic, preferably of ultra-high molecular polyethylene.

## Revendications

1. Dispositif de décharge (1) pour granulés (2), avec un boîtier (3) doté d'au moins une ouverture d'entrée (4) pour les granulés (2), avec une roue à alvéoles (6), reliée à un moteur (11), tournant autour d'un axe de rotation vertical (8), avec plusieurs ailettes (7) et des chambres (9), disposées entre elles, moyennant quoi, dans ces chambres (9) les granulés (2) peuvent être convoyés, lors de la rotation de la roue à alvéoles (6), de l'au moins une ouverture d'entrée (4) vers au moins une sortie (5), la roue à alvéoles (6) étant disposée à l'intérieur d'une douille d'usure (10) globalement cylindrique et l'au moins une sortie (5) étant disposée sur le côté inférieur de la douille d'usure (10) ;
**caractérisé en ce que** le boîtier (3) est conçu pour être disposé à l'intérieur d'un récipient (12) pour les granulés (2) et **en ce que** l'au moins une ouverture d'entrée (4) est disposée latéralement sur le boîtier (3) tout en s'étendant obliquement vers le bas.

2. Dispositif de décharge (1) selon la revendication 1, **caractérisé en ce que** l'au moins une sortie (5) présente la forme d'une fente ou d'un secteur.

3. Dispositif de décharge (1) selon la revendication 1 ou 2, **caractérisé en ce que** la roue à alvéoles (6) comprend au moins huit ailettes (7).

4. Dispositif de décharge (1) selon l'une des revendications 1 à 3, **caractérisé en ce que** les ailettes (7) de la roue à alvéoles (6) sont réalisées sous la forme d'aubes.

5. Dispositif de décharge (1) selon l'une des revendications 1 à 4, **caractérisé en ce que** les ailettes (7) de la roue à alvéoles (6) sont disposées de manière oblique.

6. Dispositif de décharge (1) selon l'une des revendications 1 à 5, **caractérisé en ce que** deux ouvertures d'entrée (4) opposées sont prévues sur le boîtier (3).

7. Dispositif de décharge (1) selon l'une des revendications 1 à 6, **caractérisé en ce que** les ouvertures d'entrée (4) sont disposées avec un angle de 30 à 40° par rapport à l'horizontale et s'étendent obliquement vers le bas.

8. Dispositif de décharge (1) selon l'une des revendications 1 à 7, **caractérisé en ce que** le moteur (11) est disposé au-dessus de la roue à alvéoles (6).

9. Dispositif de décharge (1) selon l'une des revendications 1 à 8, **caractérisé en ce que**, sur le côté inférieur du boîtier (3), sont prévus des éléments de fixation (13) pour la fixation d'un dispositif (14) de convoyage des granulés (2).

10. Dispositif de décharge (1) selon l'une des revendications 1 à 9, **caractérisé en ce que** la douille d'usure (10) peut coulisser par rapport à la roue à alvéoles (6) en direction de l'axe de rotation (8) de la roue à alvéoles (6).

11. Dispositif de décharge (1) selon la revendication 10, **caractérisé en ce que** la douille d'usure (10) est logée de manière coulissante en direction de la roue à alvéoles (6) par l'intermédiaire d'au moins un ressort (15).

12. Dispositif de décharge (1) selon l'une des revendications 1 à 9, **caractérisé en ce que** la roue à alvéoles (6) est logée, conjointement avec le moteur (11), par l'intermédiaire d'au moins un ressort (15), de manière coulissante en direction de la douille d'usure (10).

13. Dispositif de décharge (1) selon l'une des revendications 1 à 12, **caractérisé en ce que** les ailettes (7) de la roue à alvéoles (6) sont disposées sur le côté inférieur en direction de l'axe de rotation (8) de la roue à alvéoles (6) de manière à s'étendre obliquement vers le bas et **en ce que** le côté inférieur de la douille d'usure (10) est réalisé sous la forme d'un entonnoir complémentaire des ailettes (7) de la roue à alvéoles (6).

14. Dispositif de décharge (1) selon l'une des revendications 1 à 13, **caractérisé en ce que** la roue à alvéoles (6) est constituée d'une matière plastique, de préférence le polyuréthane.

15. Dispositif de décharge (1) selon l'une des revendications 1 à 14, **caractérisé en ce que** la douille d'usure (10) est constituée de matière plastique, de préférence de polyéthylène à masse moléculaire ultra élevée.
